# EUROPEAN PATENT SPECIFICATION

(11) **EP 0 531 453 B1**
(45) Date of publication and mention of the grant of the patent: **17.09.1997**
(21) Application number: 91912934.6
(22) Date of filing: 01.07.1991
(51) Int. Cl.: H04N 5/782

(54) **DUAL DECK VIDEO CASSETTE RECORDER WITH COPY PREVENTION**
DOPPELDECK VIDEOKASSETTENRECORDER MIT KOPIERVERHINDERUNG
MAGNETOSCOPE A DOUBLE PLATINE EMPECHANT LA COPIE

(30) Priority: 29.06.1990 US 546360
(43) Date of publication of application: 17.03.1993
(73) Proprietor: GO-VIDEO, INC., Scottsdale, AZ 85260 (US)
(72) Inventor: DUNLAP, R., Terren, Scottsdale, AZ 85253 (US); BERKHEIMER, John, R., Tempe, AZ 85281 (US); WOODMAN, Duane, C., Emporia, KS 66801 (US)
(74) Representative: Freeman, Jacqueline Carol
(86) International application number: PCT/US91/04718
(87) International publication number: WO 92/00649

(56) References cited:
- EP-A- 0 256 753
- WO-A-90/01850
- DE-A- 3 502 561
- US-A- 4 577 239
- US-A- 4 628 371
- US-A- 4 631 603
- US-A- 4 768 110
- US-A- 4 916 548
- US-A- 4 937 679
- US-A- 4 977 455
- PATENT ABSTRACTS OF JAPAN vol. 11, no. 279 (P-614)10 September 1987 & JP-A-62 075 901
- PATENT ABSTRACTS OF JAPAN vol. 14, no. 341 (P-1081)24 July 1990 & JP-A-21 18 940
- PATENT ABSTRACTS OF JAPAN vol. 12, no. 417 (P-782)7 November 1988 & JP-A-63 153 755

## Description

The present invention is related to U.S. Patent, and to copending application Serial No. US-A-4-768 110 07/230,181 filed August 9, 1988 corresponding to WO-A-900 1850, both of which arc assigned to G0-Video, Inc..

### Field of the Invention

This invention relates generally to the video art, and, more particularly, to improvements in single and dual deck video cassette recorders

### Background of the Invention

The present invention is, in part, an improvement in dual deck VCRs, in which the user may selectively and simultaneously play from one deck while recording on the other deck. The dual deck VCR has a flexible switching arrangement whereby the user may choose from many input devices, including the other deck, to record on one deck, and many output devices, including the other deck, to play from one deck.

Conventional VCRs prior to Go-Video's US Patent US-A-4 768 110 contained only one deck. These devices made relatively poor duplicators and the cabling arrangements between VCRs and their simultaneous use is inconvenient.

When VCRs are used together with the boxes which some cable companies supply, there is a difficulty when trying to use the VCR timing section and to have it tune to the correct channel, because the TV set is set to channel 3, the cable box must be set to the correct channel, and the VCR is also set to channel 3. If a second program is to be copied from a different cable channel the VCR has no way of telling the cable box which channel to tune in.

Also, when a VCR is to be connected with an antenna and a television set, there are many cable connections to be completed and this is confusing for many users. This is particularly troublesome when there is also a cable television input to be connected.

### Brief Summary of the Invention

It is an object of the invention to provide a VCR circuit which provides simple tape copying control and which creates a tape copy having superior quality.

It is another object of the invention to provide a dual deck VCR circuit which provides simple tape duplication of the electronic video and audio signals which have been recorded on videocassette tape, and creates tape duplicates of superior quality.

It is another object of the invention to provide a VCR device which will not record from one tape to another if the source tape has a copy protect signal on it.

It is yet another object of the invention to provide a VCR device which will sense the presence of a "black box" intended to defeat the copy protection signal placed onto the source tape.

It is a further object of the present invention to provide a VCR which allows the programming of the dual deck VCR on screen by remote control.

It is yet a further object of the present invention to provide a system which produces superior copy in which color and detail is maintained better than any other duplication process, and especially for VHS, and in which this process can be activated in the VCR-2 with just a single one touch button.

It is still another object of the invention to provide another embodiment of a VCR circuit in which the copy protect signal on a source tape can be ignored and a good copy produced in spite of the presence of this signal.

It is yet another object of the invention to provide a dual deck VCR in which is extremely easy for a user to connect the necessary cables.

It is a further object of the present invention to provide VCR circuitry which provides for the programming of the dual deck VCR on screen by remote control.

It is another object of the invention to provide a plurality of remote controllers which may control the same VCR and where one is the master controller and the others are satellite controllers for use where adults may not wish their children to watch certain programs.

According to the present invention there is provided a dual deck video cassette recorder comprising:
first and second video deck means in a common housing, and each having heads and both of said deck means being capable of playback, and at least one of said deck means being capable of recording;
switch means connected to said deck means for allowing selective connections of video and audio signals between said two deck means and characterised by;
means for sensing the angular position of the heads of each deck means to determine if they are in phase prior to initiating recording; and
means for correcting the angular position of the heads of at least one of said deck means so that the heads of each will exhibit the same angular phase.

Other objects, features and advantages will be apparent from the following detailed description of preferred embodiments taken in conjunction with the accompanying drawings in which:

### Brief Description of the Drawings

FIG. 1 is a block diagram of a dual deck VCR with multiple inputs and outputs incorporating a microprocessor controller and a multifunctional switching arrangements showing the system from the analog viewpoint.

FIG. 2 is a block diagram showing the switching arrangement for duplicating, with deck I playing a tape which is being duplicated onto a tape in deck 2.

Fig. 3 is a detailed block diagram showing the copy protection signal detector.

FIGS. 4A and 4B show some of the signals produced and/or detected in the copy protection signal circuit.

FIG. 5 shows the Y/C circuit part of the block diagram of FIG. 1;

FIG. 6 is another block diagram of a dual deck VCR showing it from the microprocessor viewpoint.

FIG. 7 is a further embodiment in which there are internal switches provided to simplify the cable hook-up for the user.

FIG. 8 is a block diagram showing the use of an IR transmitter with a the VCR.

FIG. 9 is a diagrammatic view of one manner to connect the IR transmitter and the IR receiver of FIG. 8.

FIG. 10 is a block diagram showing one manner of connecting cables and the antenna to the back of a VCR which has the present invention inside..

FIG. 11 is a block diagram showing how the cables and other parts would need to be connected outside of a VCR without using the present invention to provide similar switching functions as the present invention for connecting cables and the antenna to the back of a VCR.

FIG. 12 is a block diagram showing the internal connections with a VCR for providing a large number of connections using the present invention.

### Detailed Description of the Drawings

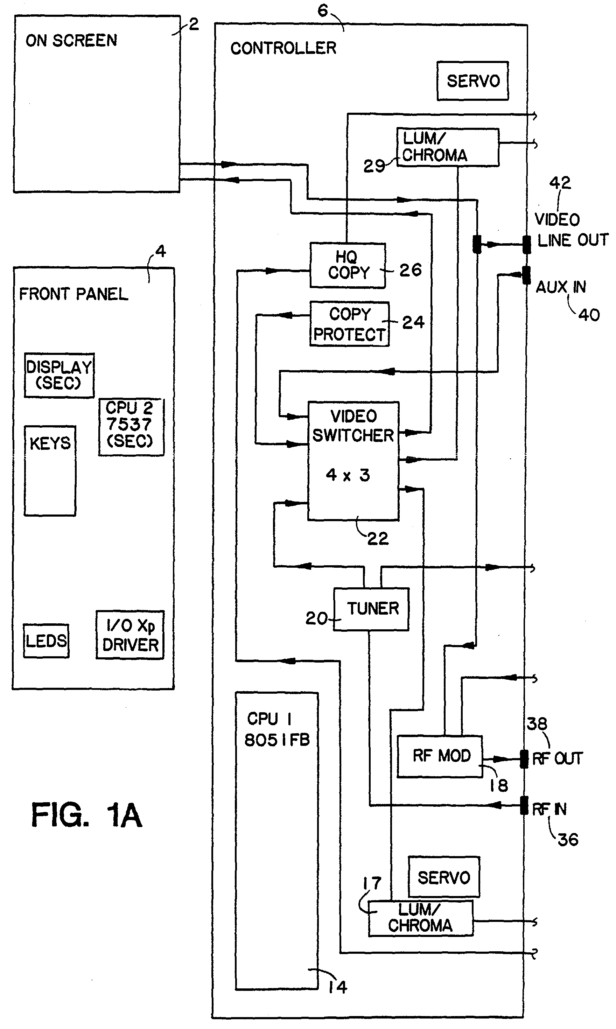

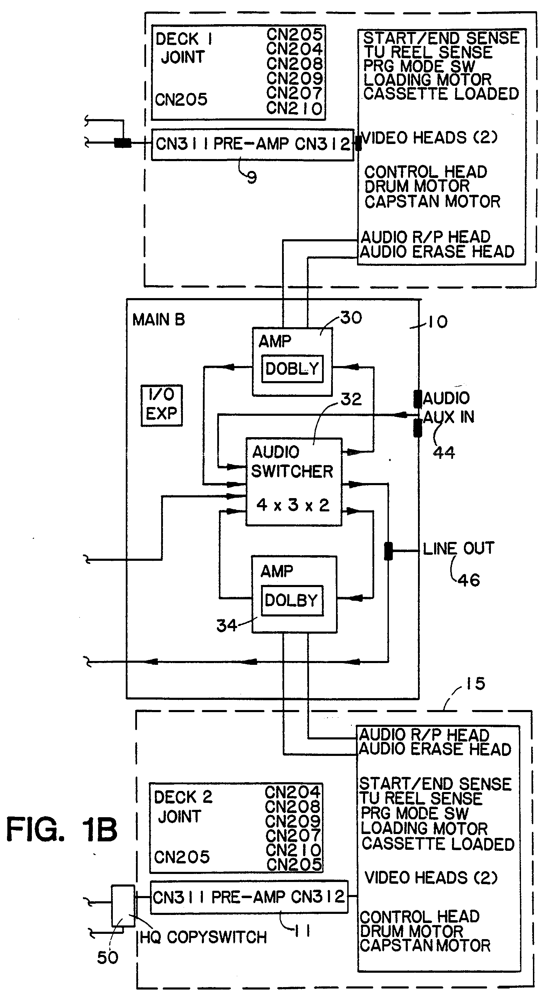

FIG. 1 is a simplified block diagram of the audio and video switching selection arrangement used in the dual deck VCR of the present invention. There are several possible input sources to each deck. Video switcher 22 selects from an RF (radio frequency) input 36, an auxiliary video input 40, the luminance and chroma output 17 from deck 2 (deck 2 is designated 15 in FIG. 1) and the luminance and chroma output 29 from deck 1 (deck 1 is designated 8 in FIG.1). The RF input is converted to video by the tuner 20, and the FM (frequency modulated) outputs from the tape heads are converted to video by the luminance (modulator/demodulator) and chroma (hetrodyning) blocks 29 and 17.

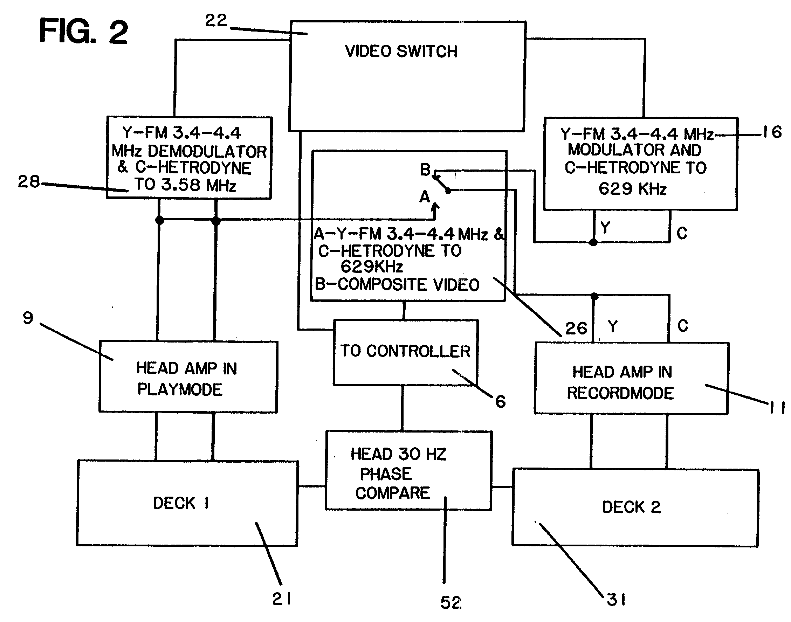

The video switcher 22 provides video outputs back to deck I via the demodulator block 28 and to deck 2 via modulator block 16 FIG.2). The video switcher 22 also has a video output which is input through an on screen character generator 2 to a line output 42. This video output is connected to an RF modulator 18 which provides an RF output 38. The viewer can input information using the keys on the front panel 4. This information is input to the CPU 14 which forms the information into the video signal with the on-screen generator 2. Using this mechanism the viewer can date stamp or place titles into either deck, since either deck can be played through the switcher 22 and output through the on-screen character generator 2 to the line out 42 or the RF modulator 18 and output 38 to a television set for display.

The microprocessor 14 controls the operation of the dual deck VCR. The operator controls and monitors the opcration via the front panel 4.

Block 10 is the audio switching arrangement. The read/play and erase heads signals from deck 1 are input to a Dolby amplifier 30, and the corresponding head signals from deck 2 are input to amplifier 34. The audio switcher 32, under the control of the microprocessor 14, selects the audio source consistent with the video selection switcher 22.

The present invention includes a system which produces superior copy in which color and detail is maintained better than any other duplication process, and especially for VHS, although it is also usable for Beta format, in which event the frequencies would differ slightly. For example, in Beta format the Y-FM lumina is 3.5-4.8 and the C-hetrodyne is 688 KHz. This process can be activated in the VCR-2 with just a single one touch button.

The CPU 14 provides for duplication from deck one to deck two as follows: first deck one is put into play: then the output composite amplified signal from the tape in deck one is routed to the input of deck two: however. this simplified signal is fed to an FM luminance and the FM chroma circuit 29: in this circuit 29 the luminance is amplified and run through a limiter to set the luminance at a constant level; the chroma is picked up after it has been processed to restore proper color burst levels; the chroma is still left at 629 KHz; the FM luminance and the FM chroma is routed though switch 22 arranged to feed the input of deck 2 head amp; also at this point the level must be set properly for the head: deck two is placed in record pause; the servos for both heads are synchronized so that both 30 Hz head signals are in phase with each other: this assures that the azimuth of the two heads are matched; deck two is then placed in record and the duplication occurs.

FIG. 2 is a detailed block diagram of the switching arrangement used for duplicating a tape in the present invention as previously described. Consider a tape in deck 1 transport 21 to be duplicated onto a tape in deck 2 transport 31. The arrangement of the HQ Copy switch 26 is to record the information on tape in deck 1 onto the tape in deck 2 as per the Y-FM lumina 3.4-4.4 MHz and C-hetrodyne process. When the tape in deck 1 is played an FM signal from the tape is received by the head amplifier 9. The head amplifier conditions and amplifies the signal making it suitable for the following electronics. If the HQ Copy switch 26 is set to the A or "Y-FM 3.4-4.4 MHz and C-hetrodyne" position as shown. the signal from the head amplifier 9 is connected directly through switch 26 to the head amplifier 11 which records onto the tape loaded in transport mechanism 31. creating a copy in transport mechanism 21. This copying method does not go through the intermediate steps of creating a video signal or an RF signal. The signal from the head amplifier 9 is an FM signal composed of the luminance signal (3.4 to 4.4 MHz) and a chroma signal (629 KHz). The luminance signal is amplified and limited to set a constant luminance level. The chroma is processed to restore proper color burst levels. These conditioned signals are routed to one side of the HQ Copy switch 26 which, as shown, connects these signals directly to the head amplifier 11 for the deck 2 transport.

The servos for the head drives in each transport must be synchronized with each other to assure the heads are matched for proper duplicating to occur. The 30 Hz head servo phase signals from each deck are input to phase compare circuitry 52, the controller 6 determines the time difference between the signals and modifies the servo drives until the servos are in phase. If the heads are not in phase the result will be a loss of chroma signal.

Even if the HQ Copy switch 26 is in the Y-FM 3.4-4.4 MHz and C-hetrodyne processing position the FM signal from deck 1 is demodulated to video in demodulator 28. With this configuration the copy protect 24 and HQ copy 26 circuits are operational and the CPU 14 will still be capable of preventing the copying of a protected tape. A copy using the video signal can be made as the demodulated signal is fed to the video switch 22. The output of the video switch 22 can be fed back through the FM modulator 16. If the copy switch 26 is set to connect the output of the FM modulator 16 to the head amplifier 11, then video signals can be recorded onto the tape in deck 2 transport 31. The arrangement of switch 26 is in the B-video duplicate or video composite position.

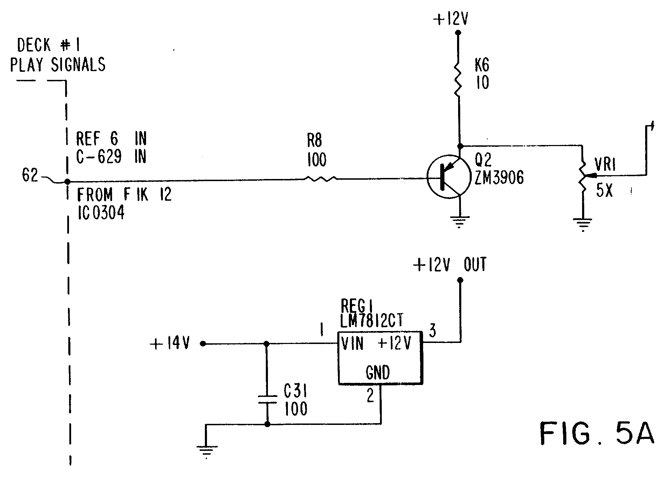

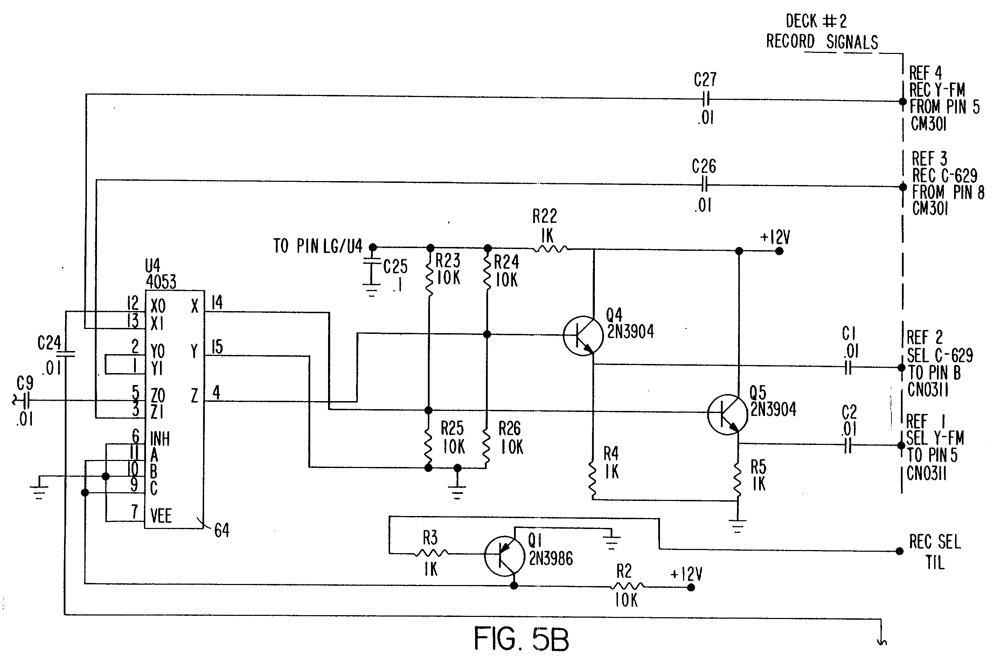

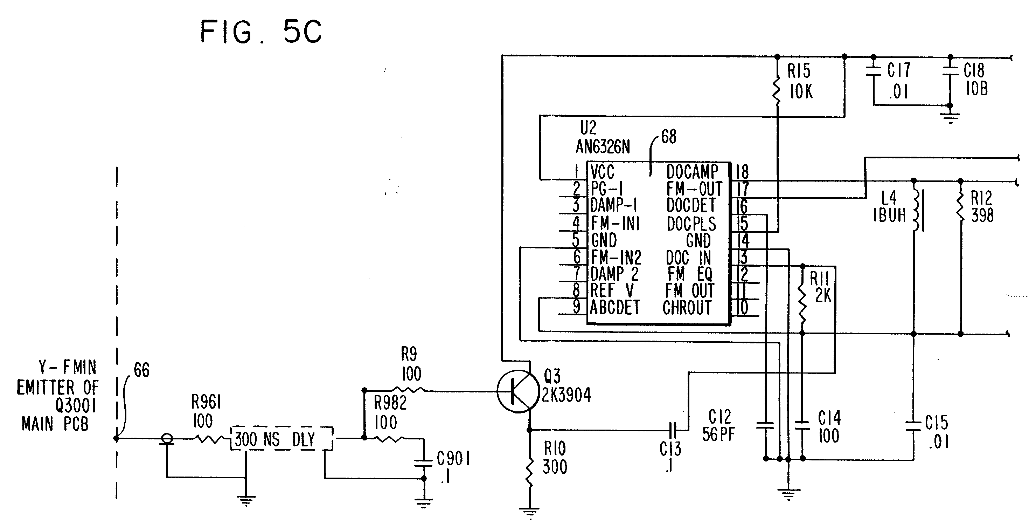

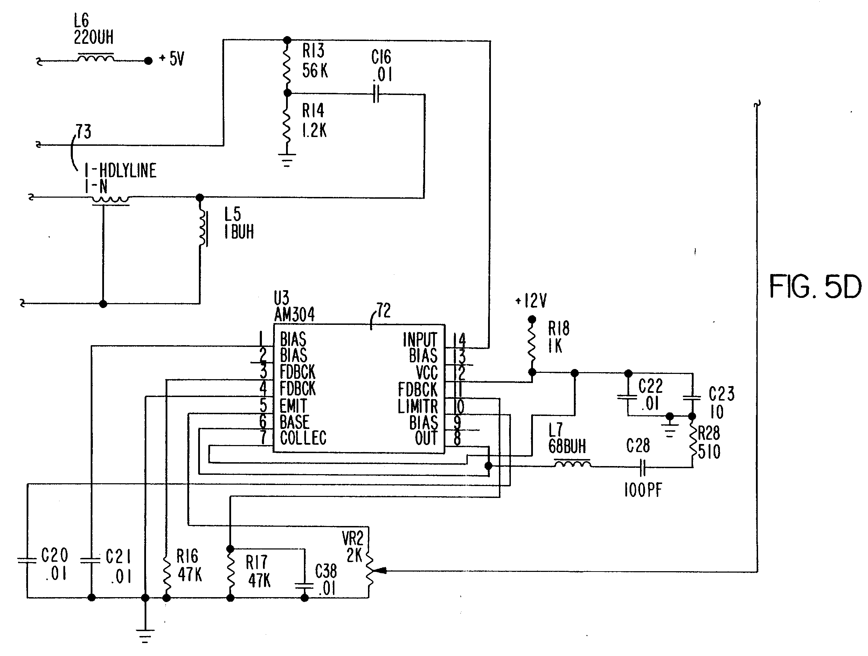

Referring to FIG.5. the chroma (C 629) is tapped from contact 62 at reference point 6 after the signal has been processed and restored to its proper level. The signal is fed into the base of Q2 to maintain a proper impedance between circuits. From the collector of Q2 through VR1 the signal goes into one side of a double throw analog switch 64. FM luminas (Y-FM) are tapped from contact 66 at reference point 5 and the signal is fed to the base of Q3, for impedance matching. From this transistor Q3, the FM luminas signal is fed into U2 designated 68. This IC 73 with a H-1 delay forms a drop out compensator (DOC) for this FM signal. After the DOC. the signal is routed through U3 designated 72 where the signal is limited to achieve a stable signal. The output of the limiter 72 is fed to one side of the double throw analog switch U4 designated 64. The DT analog switch 64 is used to switch between positions A and B (FIG.2). Ref points 5 and 6 are in deck 1 and Ref points 1, 2, 3 and 4 are in deck 2.

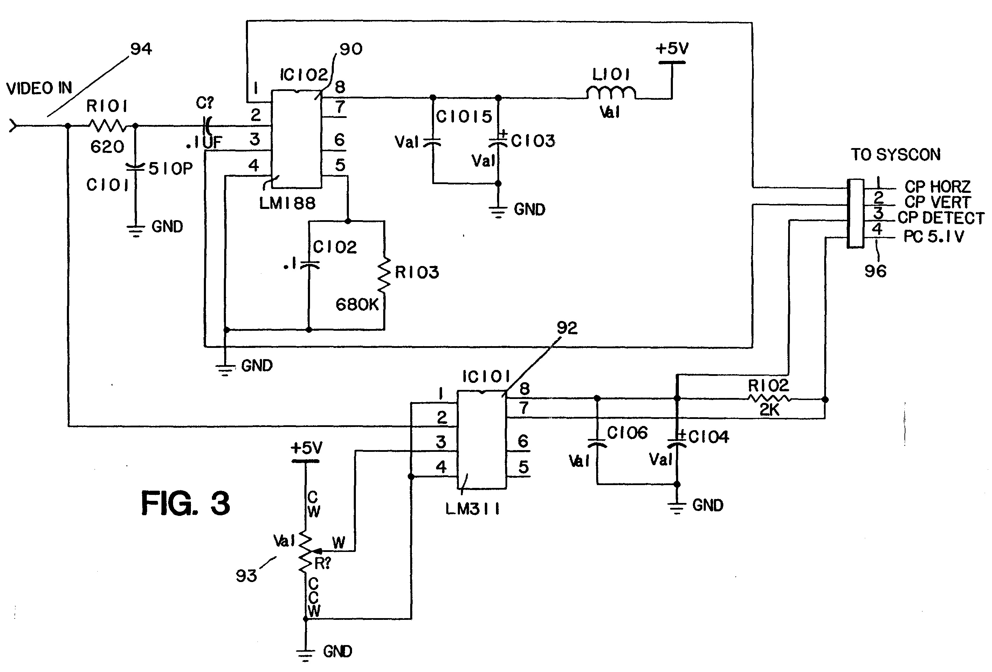

In FIG 1 block 24 is an encoded or copy protect signal circuit. This encoded signal circuit, shown in detail in FIG.3. has two functions: 1) to prevent a "black box" loop through recording of copy protected tapes which can be used to circumvent the copy protection signals being applied to video tapes by some manufacturers; and 2) to prevent VCR-2 from copying protected tapes having a copy protection signal.

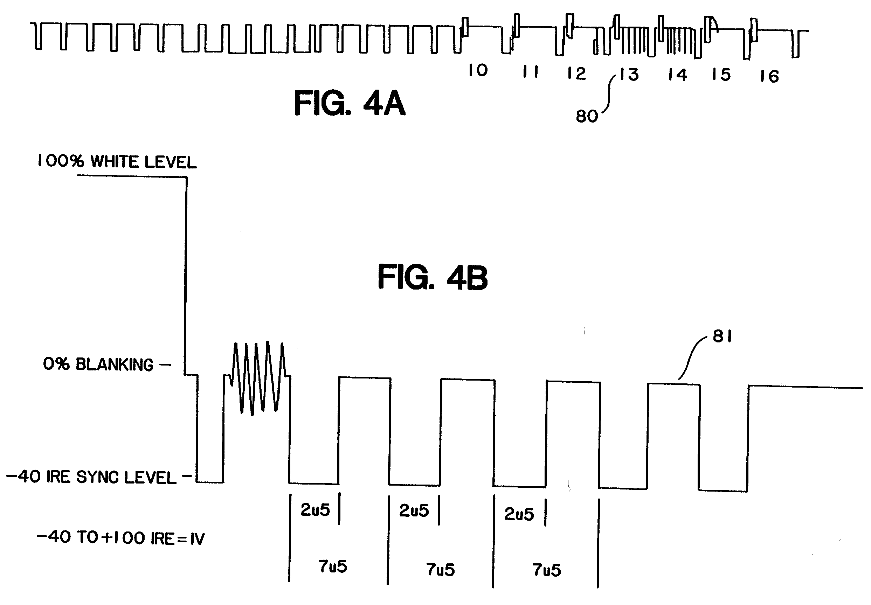

FIG. 3 shows the schematic of circuitry used in this block to detect copy protected tapes. and FIG. 4 shows one type of waveform which is added, during vertical blanking. to the video signal which implements this copy protection arrangement. The video signal from either deck is input to the circuit shown in FIG. 3. The circuitry separates out the horizontal, the vertical and a copy protect signal. These signals are input to the system CPU (central processing unit) 14 which compares them to stored patterns. If a copy protect signal is found by the CPU, the system prevents the copy from being made. Many different patterns may be used in the system since the protection pattern is stored in memory. In this preferred embodiment, the Go-Video enscription is a series of pseudo synch pulses added during the vertical blanking time.

The video signal from the selected deck is input 94 to the circuitry shown in FIG. 3. This video signal is filtered hy R101 and C101 and capacitively coupled through a capacitor to IC102 designated 90. This IC separates out the horizontal from the vertical synch signals. These signals are output through the connector 96 to the CPU 14. The CPU will compare these signals to stored signals and if there are differences the CPU will prevent the copying of the suspect tape. In addition, the video signal is input directly to a level comparator 92. The comparator is biased by the potentiometer 93. The bias is set to detect signals beyond the normal levels, such as is found in the copy protection signal used by certain companies. If the video signal level is higher than the bias setting the comparator 92 sends a high signal to the CPU via the connector 96.

The signals input to the CPU will be compared to stored signals by the CPU and if there are differences the CPU will prevent copy protected tapes from being duplicated.

Referring to FIGS. 4A and 4B. five pseudo synch pulses 80 are added to lines 13 and 14. The trace 81 in FIG. 4B shows the pseudo pulses in detail. There is a 2 microsecond negative pulse repeated every 7 microseconds five times. These pseudo synchs go from the 0% blanking level to the -40 IRE level. Since these extra pulses are below the blanking level there will be no interference with the AGC (automatic gain control) operation of tape player, so these pseudo synch pulses will not interfere with normal viewing of a tape. This protection arrangement is contrasted with other arrangements which prevent the normal playing of a tape by causing the AGC to make a tape unviewable. Also, since in the A or Y-FM 3.4-4.4 MHz and C-hetrodyne processing position of switch 26 everything that comes from the tape being played can be duplicated onto the tape being recorded, any copy protect signal can be duplicated onto the duplicate tape, or the controller CPU 14 can prevent the copying.

The circuit, after determining that there is a copy protect signal, checks to determine whether both decks are synchronized for a period of one or two minutes. If so, then copying is ceased. since, unless one deck is copying from the other deck the signals would not be synchronized for such a long period of time. This phase comparison is performed by element 52 in FIG. 2.

The present VCR has a drop out compensation feature. When a line drop out is detected. the previous line, which was stored in a delay line is substituted for the. missing or "dropped out" line. This feature is built into commercially available ICs (integrated circuits) handling the video signals used in this embodiment. When the HQ Copy switch 26 is in the A or Y-FM 3.4-4.4 MHz and C-hetrodyne process position. the video section is bypassed and not used on the tape being recorded (the duplicate tape). But, when a drop out is detected the CPU controller switches the HQ Copy switch 26 to the B position which allows the video to come through the modulator 16, and the previously stored video line is fed through to be recorded onto the duplicate tape. When that line has been recorded the controller places the HQ Copy switch 26 back to the Y-FM 3.4-4.4 MHz and C-hetrodyne process position, the A position, and only that one line of video is recorded onto the duplicate tape.

Also, the display on the front panel 4 is shared between the two decks. When the user is programming or changing one deck the parameters associated with that deck are displayed. and when the other deck is being programmed or changed its parameters are displayed.

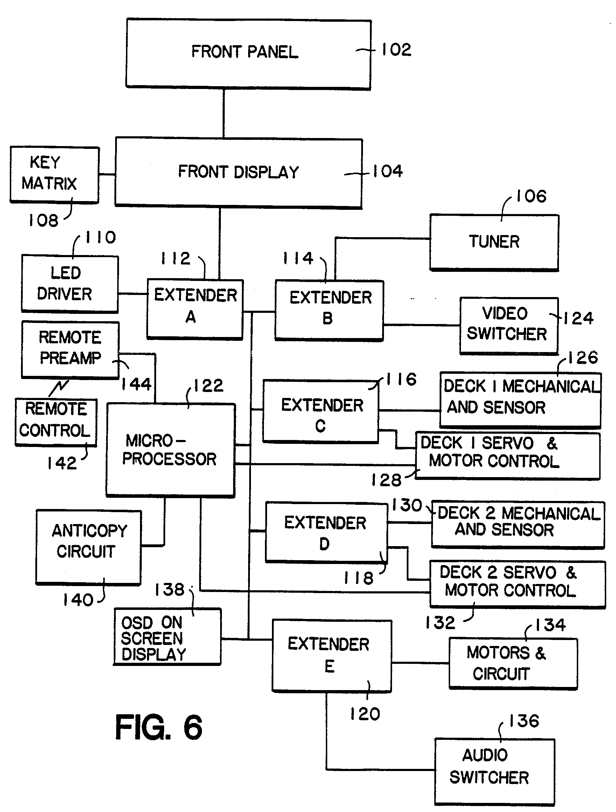

FIG. 6 is a block diagram of the microprocessor circuit showing some of the features of the dual deck VCR which it controls. The microprocessor 122 has extenders A-E. Extender A. 112 controls the front display 104, which is associated with the front panel clock and display 102. The front display 104 is like a dumb terminal, and the key matrix 108 is connected with it.

The tuner 106, of the VCR is connected to extender B. 114. as is the video switcher 124. Extender C, 116 controls the mechanical devices and sensor 126 for deck one as well as the servo and motor control 128 for deck 1, while the latter (128) is also controlled directly by the microprocessor 122 itself. The mechanical devices and sensor 130 for deck two as well as the servo and motor control 132 for deck 2 is controlled by extender D. 118, while the servo and motor control 132 is also controlled directly by the microprocessor 122 itself. Extender E, 120 controls the multi audio system 136 and the audio decoder from the tuner 106, while the on screen display 138 is directly controlled by the microprocessor 122. The motors and circuitry 134 associated with them are controlled by Extender E.

The anticopy circuit 140 is directly connected to the microprocessor 122 and the remote control 142 controls the remote preamplifier 144 which is controlled by the microprocessor 122.

There is a LED driver 110 connected to Extender A, 112.

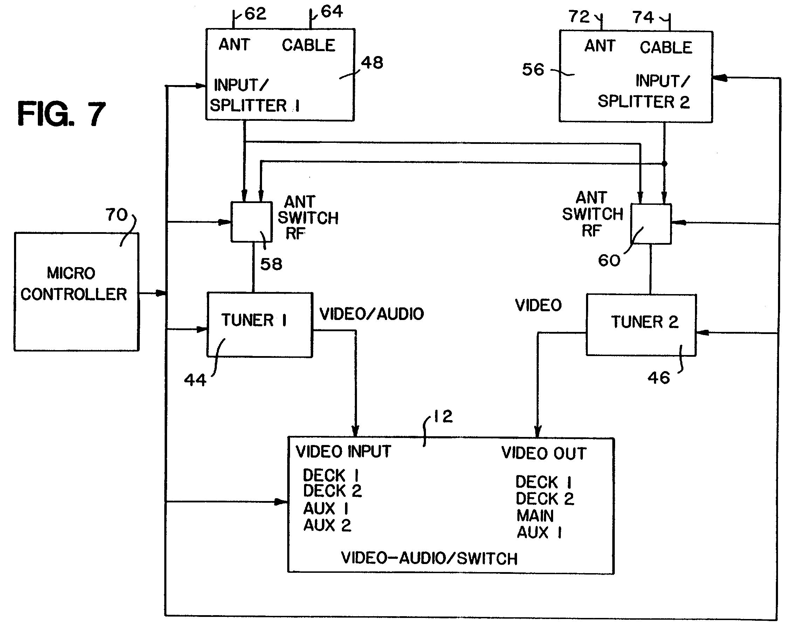

FIG. 7 shows an arrangement in which the connection of the cables to the back of the VCR is simplified. This is accomplished by providing for internal switching to reduce the number of cables which would otherwise need to be connected to the back of the unit. There are two input splitters 48 and 56 for decks 1 and 2, respectively. The deck one splitter 48 has an antenna connection which provides commercial video broadcast signals to RF antenna switch 58 and to tuner 44, while the deck two splitter 56 has an antenna connection which provides satellite or commercial video broadcast signals to RF antenna switch 60 and to tuner 46. The second input to splitter 48 can be Cable TV, while the second input to splitter 56 can be a camera. or another type of Cable TV, or from another VCR.

Antenna switches 58 and 60 are arrangeed to provide any signal in one of them. to the other of them and thus any signal being input can be directed to either deck, to both decks at the same time, to the TV monitor. or to any other input/output provided in the system. There are also two tuners 44 and 46, one for each deck. Also there is video-audio switch 12. Further there is the microcontroller 70. Thus, two different programs can be recorded at the same time, from commercial TV, or one from commercial TV and one from Cable TV, and, at the same time, the viewer can be watching a third program which could be commercial TV. The detailed switching needed to provide such variations and flexibility is provided by the switching within the Dual Deck System and it is all transparent to the user, who only needs to hook up the few input and output cables in the back of the units and then everything else is accomplished by the electronics. These would include the cables from the the antenna for commercial TV, cable TV and the other inputs, which could include an input from a satellite dish. Also, at least one output cable is connected to the TV set for viewing.

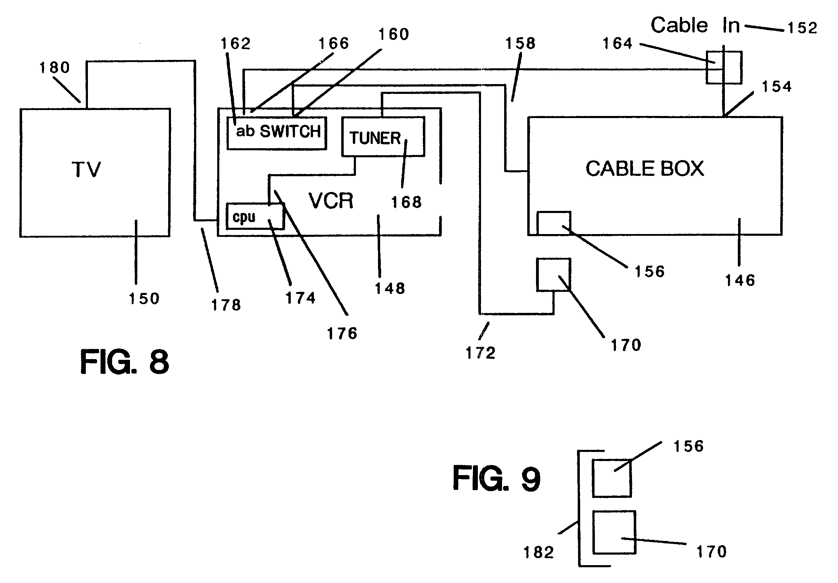

FIG. 8 shows a typical cable box 146 which can be remotely controlled which is connected with the VCR 148 which is connected with a television set 150. The cable from the cable company enters at 152 and is fed into the cable box at 154. The cable box has the usual IR receiver 156 built in and visible from the TV viewing area where it is accessible to the remote control supplied with the cables box. The output 158 from the cable box is fed into the VCR at 160 and is actually fed into a part of the VCR which includes an AB Switch box 162. The cable signal is tapped at 164 and is brought directly to the AB Switch box at 166. There is the typical TV tuner 168 in the VCR which includes a special section which drives an IR transmitter 170 through lead 172 so that the VCR tuner sets the IR transmitter to the correct channel as has been programmed into the VCR by the user. The tuner is connected with CPU 174 in the VCR at 176 to control it and the IR transmitter. The signal from the VCR is sent to the TV from output 178 of the VCR to the video input 180 of the TV 150.

In use, the VCR shown in FIG. 8, which may be a dual deck type or a single deck type, is set in the usual manner and it is informed that there is a cable box which needs to be controlled. This assures that the IR transmitter 170 will be actuated. After a first program is recorded and it is desired that another program be taped on a different cable channel. the VCR, through the CPU, instructs IR transmitter at the appropriate time to change the channel on the cable box by sending the appropriate IR code signifying the desired channel. After the channel is changed, the VCR is ready for recording in the usual manner.

While the IR transmitter can be aimed at the cable box and be placed on a flat surface such as a table, this is not always suitable because it can easily be moved or fall. Therefore, a special arrangement as shown in FIG. 9 is provided so that the IR transmitter can be actually attached to the cable box with a clamp 182 in a position where it faces directly into the IR transmitter so that any signal emanating from the IR transmitter will be received by the IR receiver.

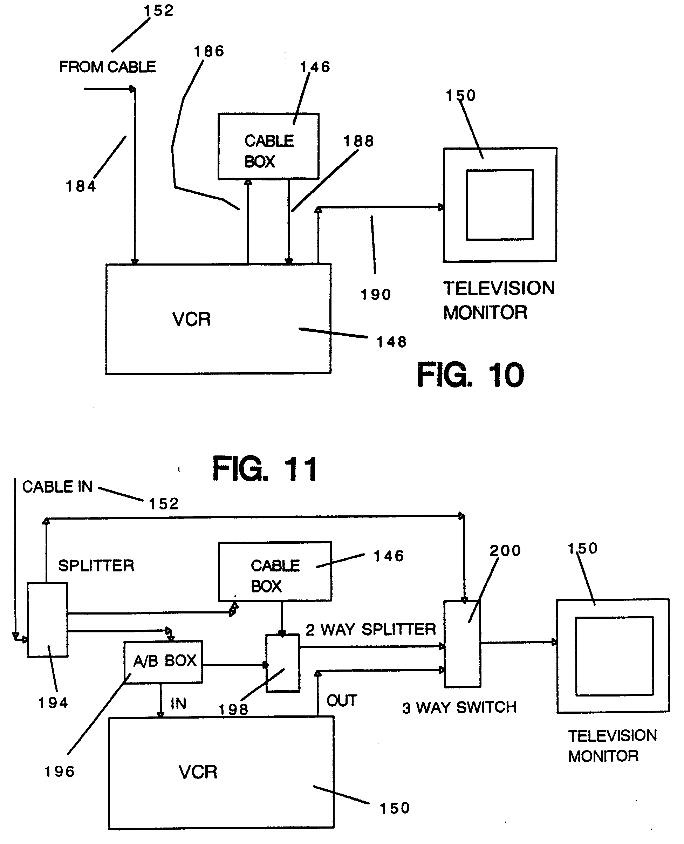

FIG. 10 shows how a versatile arrangement using the present invention looks from outside of the VCR 148. Thus there are only four connections which a user need make. These are the connection from the cable input 152 to the VCR 148 as shown at 184, the output of the VCR to the input of the cable box 146 as shown at 186, the output of the cable box to another input on the VCR as shown at 188, and the output of the VCR to the television set 150 as shown at 190. Yet with these few external connections, many different possible arrangements are possible, as will be described below.

FIG. 11 shows how such connections would have to be provided today externally of the VCR if the present invention were not used. A present day VCR 192 is shown connected to a television set 150, and there is a cable in tap 152 and a cable box 146. A splitter 194 is connected from cable in 152 to three locations which are: 1) the cable box 146, 2) a 3 way switch 200, and 3) an A/B box 196. The A/B box 196 has two outputs which may be selected by the viewer. One goes into the VCR. and the other goes to a 2 way splitter 198 which receives input from the cable box 146 and the A/V box 196, and having an output to the 3 way switch 200. The 3 way switch 200 has three inputs which may be selected, and they are 1) the output from the VCR, 2) the output from the cable splitter 194, and 3) input from the 2 way splitter 198.

With such an arrangement a viewer may: 1) watch the cable signal directly without it having passed through the cable box or the VCR, and thus scrambled 2) view a program from a signal which has been processed by the cable box. 3) view a program from a signal after it passes through the VCR.

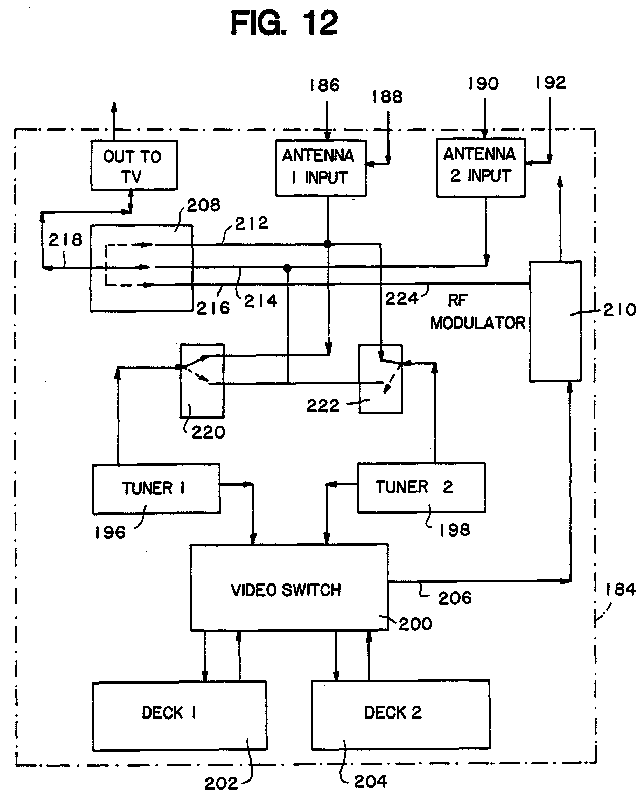

However, as shown in FIG. 12, the present invention provides an arrangement with the flexibility of the above described circuit but which provides more options and does not require the complicated connections of cables as is required with the FIG. 11 arrangement. the phantom lines in FIG. 12 indicates the housing of the VCR so that all of the connections shown are within the housing. All the viewer need do is to connect a few cables to the rear of the VCR as shown at the top of FIG. 12. There is a Dual Deck VCR (although a single deck VCR can be used in its place) 184. One of the antenna inputs 186 may be one cable and the other can be another cable, or a typical antenna which receives commercial broadcast stations, or some other type of input. There is a loop-through 188 with a built in splitter so that another, possibly related, signal may be connected. The second input 190 may be one of the above-mentioned other connections. This input 190 also has a loop-through 192 so that another signal may be connected. In addition there is an output 194 to the television set.

Within the VCR there can be two tuners 196 and 198 (although if desired only one is provided). The tuners are connected to a video switch 200 which is connected to the decks 202 and 204. The video switch 200 has output as well as input to the decks, and another output 206 goes to an RF modulator 210 which is fed through the triple switch 208 to the output 194 to the television.

The triple switch 208 has three inputs 212, 214 and 216 which are selectively fed to the output 218 which goes to the television set. Input 212 is connected to antenna 1 input and to two single throw double pole switchers 220 and 222, so that either tuner can be connected to either antenna source. Input 214 is connected to antenna 2 input and also to the dpst switchers 220 and 222, so that the other tuner can be connected to the other antenna source. Input 216 is connected to the output 224 of RF modulator 210.

## Claims

1. A dual deck video cassette recorder comprising:
first and second video deck means (21, 31) in a common housing, and each having heads (2) and both of said deck means (21, 31) being capable of playback, and at least one of said deck means (21, 31) being capable of recording;
switch means (22, 32) connected to said deck means (21, 31) for allowing selective connections of video and audio signals between said two deck means (21, 31) and characterised by;
means (52) for sensing the angular position of the heads (2) of each deck means (21, 31) to determine if they are in phase prior to initiating recording; and
means (6) for correcting the angular position of the heads of at least one of said deck means so that the heads of each will exhibit the same angular phase.

2. A dual deck video cassette recorder, as claimed in Claim 1, wherein each deck means (21, 31) has mechanical and sensor means for sensing the positions of said heads (2) of both deck means (21, 31).

3. A dual deck video cassette recorder, as claimed in Claim 1 or 2, wherein each said deck means (21, 31) has servo and motor control means for placing the heads (2) into synchronized angular positions.

4. A dual deck video cassette recorder as claimed in Claim 1, 2 or 3, wherein the means for correcting the angular position is arranged to operate prior to the initiation of recording.

5. A dual deck video cassette recorder as claimed in Claim 1, including:
at least two types of duplicating circuit means, one being a Y-FM lumina 3.4-4.4 MHZ and C-heterodyne means and the other a modulated duplicate or composite video means;
means for sensing the quality of the signals recorded on a source tape;
means for connecting one of said duplicating circuit means to perform copying of the information on one tape onto another tape based upon the quality of signal tested;
wherein said means for sensing the angular position of the heads (2) is arranged for operation when the duplicating circuit means using the Y-FM lumina 3.4-4.4 MHZ and C-heterodyne process is used.

6. A dual deck video cassette recorder as claimed in Claim 5, further comprising:
means (14) for detecting a copy protection signal on a tape in one deck means (21, 31) during vertical blanking and the signal being located and timed so that it will not interfere with normal operation of the video signals, to produce a quality picture on a TV monitor or place information onto tape in one deck which provides a quality picture; and
means for ceasing, and preventing, any copying function being performed when the copy protection signal has been detected.

7. A dual deck video cassette recorder, as claimed in Claim 6, further comprising means for determining, after the copy protection signal has been detected, the length of time the signals at both decks are synchronized for a predetermined period of time.

8. A dual deck video cassette recorder, as claimed in Claim 6, further comprising means for detecting synchronization of the signals at both deck means (21, 31) for said predetermined time period.

9. A dual deck video cassette recorder as defined in Claim 8, wherein said means for ceasing and preventing copying is actuated when said synchronization detecting means has detected synchronization of the signals of both deck means (21, 31) for the predetermined period of time.

10. A dual deck video cassette recorder as claimed in Claim 5, further comprising:
first and second video tuner means (44, 46) connected to said first and second video deck means (21, 31) respectively;
first and second signal splitters (48, 56), having inputs arranged to be connected to an antenna and at least one other video input and to the tuner means and a microprocessor (70);
first and second video RF switches (58, 60), connected between signal splitter inputs and the tuner means (44, 46) of that deck means and to a microprocessor;
a television set (150);
said switch means (58, 60) being connected to both deck means for allowing selective connections of video and audio signals between the two deck means (21, 31), and for connecting the input or output to or from either of said deck means (21, 31) to the television set (150) such that a viewer may: record one commercial TV broadcast on one of said deck means (21, 31), record another commercial TV broadcast on the other of said deck means (21, 31), and watch a third commercial TV broadcast on the TV set (510).

## Patentansprüche

1. Videokassettenrecorder mit Doppeldeck, umfassend:
ein erstes und ein zweites Videodeck (21, 31) in einem gemeinsamen Gehäuse, die beide einen Kopf (2) haben, wobei mit beiden genannten Decks (21, 31) wiedergegeben und mit wenigstens einem der genannten Decks (21, 31) aufgezeichnet werden kann;
einen Schalter (22, 32), der an die genannten Decks (21, 31) angeschlossen ist, um eine selektive Schaltung von Video- und Tonsignalen zwischen den genannten beiden Decks (21, 31) zu ermöglichen, gekennzeichnet durch:
ein Mittel (52) zum Abtasten der Winkelposition der Köpfe (2) jedes Decks (21, 31), um vor dem Einleiten der Aufzeichnung zu ermitteln, ob sie gleichphasig sind; und
ein Mittel (6) zum Korrigieren der Winkelposition der Köpfe von wenigstens einem der genannten Decks, so daß die Köpfe von jedem die gleiche Winkelphase aufweisen.

2. Videokassettenrecorder mit Doppeldeck nach Anspruch 1, bei dem jedes Deck (21, 31) über mechanische und sensorische Mittel zum Abtasten der Positionen der genannten Köpfe (2) der beiden Decks (21, 31) verfügt.

3. Videokassettenrecorder mit Doppeldeck nach Anspruch 1 oder 2, bei dem jedes der genannten Decks (21, 31) über eine Servo- und Motorsteuerung verfügt, um die Köpfe (2) in synchronisierte Winkelpositionen zu bringen.

4. Videokassettenrecorder mit Doppeldeck nach Anspruch 1, 2 oder 3, bei dem das Mittel zum Korrigieren der Winkelposition so angeordnet ist, daß es vor dem Einleiten der Aufzeichnung in Betrieb ist.

5. Videokassettenrecorder mit Doppeldeck nach Anspruch 1, umfassend:
wenigstens zwei Arten von Duplizierschaltungen, wobei die eine eine Y-FM Lumina 3,4 - 4,4 MHz und C-Heterodyn-Schaltung und die andere eine modulierte Duplikat- oder Verbundvideo-Schaltung ist;
ein Mittel zum Abtasten der Qualität der auf ein Quellband aufgezeichneten Signale;
ein Mittel zum Anschließen einer der genannten Duplizierschaltungen, um die auf einem Band enthaltenen Informationen auf der Basis der Qualität des getesteten Signals auf ein anderes Band zu kopieren;
wobei das genannte Mittel zum Abtasten der Winkelposition der Köpfe (2) so angeordnet ist, daß es betrieben wird, wenn die Duplizierschaltung unter Anwendung des Y-FM Lumina 3,4 - 4,4 MHz und C-Heterodyn-Prozesses verwendet wird.

6. Videokassettenrecorder mit Doppeldeck nach Anspruch 5, ferner umfassend:
ein Mittel (14) zum Erfassen eines Kopierschutzsignals auf einem Band in einem Deck (21, 31) während der vertikalen Austastung, wobei Position und zeitliche Abstimmung des Signals den normalen Betrieb der Videosignale nicht beeinflussen, um ein Qualitätsbild auf einem TV-Bildschirm zu erzeugen oder Informationen auf ein Band in einem Deck zu setzen, das ein Qualitätsbild liefert; und
ein Mittel zum Beenden oder Verhindern der Durchführung von Kopierfunktionen, wenn das Kopierschutzsignal ermittelt wird.

7. Videokassettenrecorder mit Doppeldeck nach Anspruch 6, ferner umfassend ein Mittel zum Bestimmen der Zeitspanne, in der die Signale auf beiden Decks über eine vorgegebene Zeitdauer synchronisiert werden, nachdem das Kopierschutzsignal erfaßt wurde.

8. Videokassettenrecorder mit Doppeldeck nach Anspruch 6, ferner umfassend ein Mittel zum Erfassen der Synchronisation der Signale auf beiden Decks (21, 31) über die genannte vorgegebene Zeitdauer.

9. Videokassettenrecorder mit Doppeldeck nach Anspruch 8, bei dem das genannte Mittel zum Beenden und Verhindern einer Kopierfunktion betätigt wird, wenn das genannte Synchronisationserfassungsmittel eine Synchronisation der Signale auf beiden Decks (21, 31) über die vorgegebene Zeitdauer erfaßt hat.

10. Videokasssttenrecorder mit Doppeldeck nach Anspruch 5, ferner umfassend:
einen ersten und einen zweiten Videotuner (44, 46), die jeweils an dem genannten ersten und zweiten Videodeck (21, 31) angeschlossen sind;
einen ersten und einen zweiten Signalsplitter (48, 56) mit Eingängen, die so angeordnet sind, daß sie an eine Antenne und an wenigstens einen anderen Videoeingang und an den Tuner und an einen Mikroprozessor (70) angeschlossen werden können;
einen ersten und einen zweiten Video-HF-Schalter (58, 60), die zwischen Signalsplittereingängen und dem Tuner (44, 46) dieses Decks und an einen Mikroprozessor angeschlossen sind;
einen Fernsehapparat (150);
wobei der genannte Schalter (59, 60) an beide Decks angeschlossen ist, um selektive Schaltungen von Video- und Tonsignalen zwischen den beiden Decks (21, 31) zu ermöglichen und um den Eingang oder Ausgang zu bzw. von einem der genannten Decks (21, 31) mit dem Fernsehapparat (150) so zu schalten, daß ein Zuschauer eine Fernsehsendung auf einem der genannten Decks (21, 31) aufzeichnen, eine andere Fernsehsendung auf dem anderen der genannten Decks (21, 31) aufzeichnen und eine dritte Fernsehsendung auf dem Fernsehapparat (150) anschauen kann.

## Revendications

1. Magnétoscope à deux platines comprenant :
des premier et deuxième moyens de platine vidéo (21, 31) dans un boîtier commun, et ayant chacun des têtes (2) et lesdits moyens de platine (21, 31) étant tous deux adaptés pour la reproduction et au moins l'un desdits moyens de platine (21, 31) étant adapté pour l'enregistrement ;
des moyens de commutation (22, 32) connectés auxdits moyens de platine (21, 31) pour permettre les connexions sélectives de signaux vidéo et audio entre lesdits deux moyens de platine (21, 31) et caractérisé par :
des moyens (52) destinés à détecter la position angulaire des têtes (2) de chacun des moyens de platine (21, 31) pour déterminer si elles sont en phase avant de commencer l'enregistrement ; et
des moyens (6) destinés à corriger la position angulaire des têtes d'au moins un desdits moyens de platine de manière à ce que les têtes de chacun présentent la même phase angulaire.

2. Magnétoscope à deux platines selon la revendication 1, dans lequel chacun des moyens de platine (21, 31) a des moyens mécaniques et de détection destinés à détecter les positions desdites têtes (2) des deux moyens de platine (21, 31).

3. Magnétoscope à deux platines selon la revendication 1 ou 2, dans lequel chacun desdits moyens de platine (21, 31) a des moyens de commande de moteur et d'asservissement pour placer les têtes (2) en positions angulaires synchronisées.

4. Magnétoscope à deux platines selon la revendication 1, 2 ou 3, dans lequel les moyens destinés à corriger la position angulaire sont agencés pour fonctionner avant le début de l'enregistrement.

5. Magnétoscope à deux platines selon la revendication 1, comprenant :
au moins deux types de moyens de circuit de duplication, l'un étant constitué de moyens Y-FM lumina à 3,4 à 4,4 MHz et C-hétérodynes, et l'autre étant constitué de moyens vidéo composites ou doubles modulés ;
des moyens pour détecter la qualité des signaux enregistrés sur une bande source ;
des moyens pour connecter un desdits moyens de circuit de duplication afin de réaliser la copie des informations d'une bande sur une autre bande sur la base de la qualité du signal testé ;
dans lequel lesdits moyens destinés à détecter la position angulaire des têtes (2) sont agencés pour fonctionner lorsque les moyens de circuit de duplication utilisant le procédé Y-FM lumina à 3,4 à 4,4 MHz et C-hétérodyne sont utilisés.

6. Magnétoscope à deux platines selon la revendication 5, comprenant en outre :
des moyens (14) destinés à détecter un signal de protection de copie sur une bande dans un des moyens de platine (21, 31) pendant la suppression de trame et le signal étant situé et synchronisé de manière à ce qu'il ne gêne pas le fonctionnement normal des signaux vidéo, afin de produire une image de qualité sur un écran de télévision ou de placer des informations sur la bande dans une platine qui assurent une image de qualité ; et
des moyens pour cesser, et empêcher, le déroulement de toute fonction de copie lorsque le signal de protection de copie a été détecté.

7. Magnétoscope à deux platines selon la revendication 6, comprenant en outre des moyens pour déterminer, après détection du signal de protection de copie, la durée pendant laquelle les signaux dans les deux platines sont synchronisés pendant une durée prédéterminée.

8. Magnétoscope à deux platines selon la revendication 6, comprenant en outre des moyens pour détecter la synchronisation des signaux dans les deux moyens de platine (21, 31) pendant ladite durée prédéterminée.

9. Magnétoscope à deux platines selon la revendication 8, dans lequel lesdits moyens pour cesser et empêcher la copie sont actionnés lorsque lesdits moyens de détection de synchronisation ont détecté la synchronisation des signaux dans les deux platines (21, 31) pendant la durée prédéterminée.

10. Magnétoscope à deux platines selon la revendication 5, comprenant en outre :
des premier et deuxième moyens de syntonisation vidéo (44, 46) connectés auxdits premier et deuxième moyens de platine vidéo (21, 31), respectivement ;
des premier et deuxième diviseurs de signal (48, 56) ayant des entrées agencées pour être connectées à une antenne et à au moins une autre entrée vidéo et aux moyens de syntonisation et un microprocesseur (70);
des premier et deuxième commutateurs vidéo haute fréquence (58, 60) connectés entre les entrées du diviseur de signal et les moyens de syntonisation (44, 46) de ce moyen de platine et à un microprocesseur ;
un poste de télévision (150);
lesdits moyens de commutation (58, 60) étant connectés aux deux moyens de platine pour permettre les connexions sélectives des signaux audio et vidéo entre les deux moyens de platine (21, 31), et pour connecter l'entrée ou la sortie de l'un ou l'autre desdits moyens de platine (21, 31) au poste de télévision (150) de façon à ce qu'un spectateur puisse : enregistrer un programme de télévision sur l'un desdits moyens de platine (21, 31), enregistrer un autre programme de télévision sur l'autre desdits moyens de platine (21, 31) et regarder un troisième programme de télévision sur le poste de télévision (150).
